# EUROPEAN PATENT SPECIFICATION

(11) **EP 0 875 097 B1**
(45) Date of publication and mention of the grant of the patent: **30.03.2005**
(21) Application number: 97902790.1
(22) Date of filing: 28.01.1997
(51) Int. Cl.: H04B 1/10, H04B 1/707

(54) **METHOD AND ARRANGEMENT OF SIGNAL TRACKING AND A RAKE-RECEIVER UTILIZING SAID ARRANGEMENT**
VERFAHREN UND VORRICHTUNG ZUR SIGNALVERFOLGUNG UND RAKE-EMPFÄNGER MIT EINEM SOLCHEN SYSTEM
PROCEDE ET DISPOSITIF DE POURSUITE DE SIGNAUX ET RECEPTEUR RAKE ASSOCIE

(30) Priority: 02.02.1996 SE 9600394
(43) Date of publication of application: 04.11.1998
(73) Proprietor: Telefonaktiebolaget LM Ericsson (publ), 164 83 Stockholm (SE)
(72) Inventor: FÄRJH, Jan, S-122 37 Enskede (SE)
(74) Representative: Lövgren, Tage
(86) International application number: PCT/SE1997/000132
(87) International publication number: WO 1997/028608

(56) References cited:
- EP-A- 0 691 754
- GB-A- 2 291 567

## Description

### TECHNICAL FIELD

The present invention relates to a method and an arrangement of tracking signals in a radio receiver and a RAKE-receiver utilizing said apparatus. More specifically, the invention relates to a method and an arrangement of tracking signals that are received by a RAKE-receiver of a CDMA-system in very close time-dispersed relationship, and maintaining the signal sampling positions separated in time.

### BACKGROUND OF THE INVENTION

In a mobile radio system, the existance of such signal reflecting surfaces as walls, building structures, hills, mountains etc. are liable to cause the receiver of a radio signal perceiving the signals to be dispersed in time, wherewith signals that carry the same information will arrive at the receiver at different time delays. For instance, the signals received may comprise a strongly dominant signal component, e.g. a direct wave, and weaker reflected signals belonging to the dominant signal component, so-called rays, or a spread of rays of essentially uniform strength. In general, there exists a ray which is stronger than the remaining rays and this ray can then be considered as the main ray.

Time dispersion is generally disadvantageous, since the signals are able to interfere with one another and therewith create interference fading. Time dispersion can, however, also be of benefit. The reflected signals transmit the same information as the main signal. When fading has caused pronounced attenuation of the main signal itself, the main signal can be reconstructed" or amplified by constructive addition of the time-dispersed rays, i.e. the signal becomes diversity amplified.

A RAKE-receiver is a radio receiver which utilizes this feature of time dispersed signals. The RAKE-receiver includes a plurality of independent receiver units, so-called RAKE-branches, each of which receives and tracks, or locates, a respective ray. The RAKE-receiver also includes means for combining the received signals, and means for delaying these signals so that they will be brought into phase prior to combining the signals. In order to be able to utilize diversity it is necessary to detect a plurality of incoming time-dispersed rays, which places commensurate demands on the resolution sensitivity of the receiver.

Receivers for multi-path spread rays based on the RAKE-principle are known from US-patent specification 5 305 349, and 5 237 586, and from International patent application W094/28640. These publications describe various ways of combining the received signals to obtain diversity amplified output signals. In the known RAKE-receivers, the RAKE-branches each track respective rays independently of one another. The drawback with the known RAKE-receivers is that when two incoming rays are located so close together that the RAKE-receiver is unsuccessful in resolving the signals, each of the two branches responsible for tracking a respective ray will track one and the same ray, so that one of the rays will not be tracked.

EP, A, 691754, discloses a RAKE-receiver which includes a number of correlators that can be changed dynamically between acquisition and tracking modes. In a situation with a plurality of multipath-propagated signals, one branch is dedicated for acquisition, whereas a plurality of branches are used for tracking different multipath-propagated signals. In a situation with no multipath-propagated signals, the operating mode can be changed such that several branches are used for acquisition and one branch for tracking. The receiver can thus be effectively used in cells of different seize and under different operating conditions without using a large number of correlators.

The published patent application GB 2 286 509A describes a method of measuring the impulse response of a received signal in a radio system. The receiver may operate in accordance with the RAKE-principle. The maximum and minimum impulse-response values are measured by a separate receiver and stored in a memory. The time-setting of the branches of the RAKE-receiver are controlled in accordance with the stored values. When the time distance between two mutually adjacent maxima is smaller than a predetermined threshold value, only one of the maximum instants is used to determine the time setting of the branches. The other signal is not then tracked. This is a disadvantage, because the diversity cannot be utilized.

### SUMMARY OF THE INVENTION

The present invention is concerned with the problem of how to track time-dispersed rays incoming to a RAKE-receiver in very close succession individually so as to enable frequency diversity to be utilized. When two rays incoming to a RAKE-receiver have very little time dispersion in relation to one another, the receiver may perceive the two rays as being only one single ray. The RAKE-receiver is unable to resolve rays of all incoming densities, meaning that the frequency diversity between the two rays will be lost.

Furthermore, the bit error rate of the receiver output signal 1 will be greater when two incoming rays cannot be separated from one another.

In the earlier known RAKE-receivers, each branch shall endeavour to track its allocated ray irrespective of the sampling positions of the remaining branches. This can result in one or more branches confusing its ray with another ray that arrives at the receiver at almost the same time. This means that certain rays will not be tracked and that the anticipated diversity gain will not be obtained.

One object of the invention is thus to control ray tracking in a manner which will avoid losing the tracking of a ray that can contribute to the diversity gain.

According to the present invention, the aforesaid problems are solved by ensuring that the branch sampling positions are not brought too close together when updating, and, if this occurs by forcing the branch sampling positions apart. In this way, frequency diversity between the rays is obtained and the quality of the output signal is improved.

More specifically, the problem is solved with a method for tracking radio signals as set out in claim 1 and with an arrangement as set out in claim 11. The problem is also solved with a RAKE-receiver of claim 15, which includes the above-indicated arrangement.

The advantage afforded by the invention is that rays which arrive at a RAKE-receiver in a very dense sequential relationship can be tracked by maintaining their sampling positions separated in time and therewith enable the frequency diversity between the rays to be utilized.

Another advantage is that the signal quality of the output signals from the RAKE-receiver are improved, because the bit error content of the received baseband signal will be lower than if the inventive method had not been applied.

The invention will now be described in greater detail with reference to preferred exemplifying embodiments thereof and also with reference to the accompanying drawings.

### BRIEF DESCRIPTION OF THE DRAWINGS

Figures 1a and 1b are diagrammatic illustrations of two time-dispersed signals.
Figure 2 is a block schematic illustrating part of a CDMA-system including a RAKE-receiver and an inventive arrangement.
Figure 3 is a block schematic illustrating an inventive arrangement.
Figure 4a-c are diagrams of the so-called early/late-algorithm used when applying the inventive method.
Figures 5a-d illustrate three separating strategies applied when using the inventive method.
Figure 6 is a flowchart illustrating the inventive method.

### DETAILED DESCRIPTION OF PREFERRED EMBODIMENTS

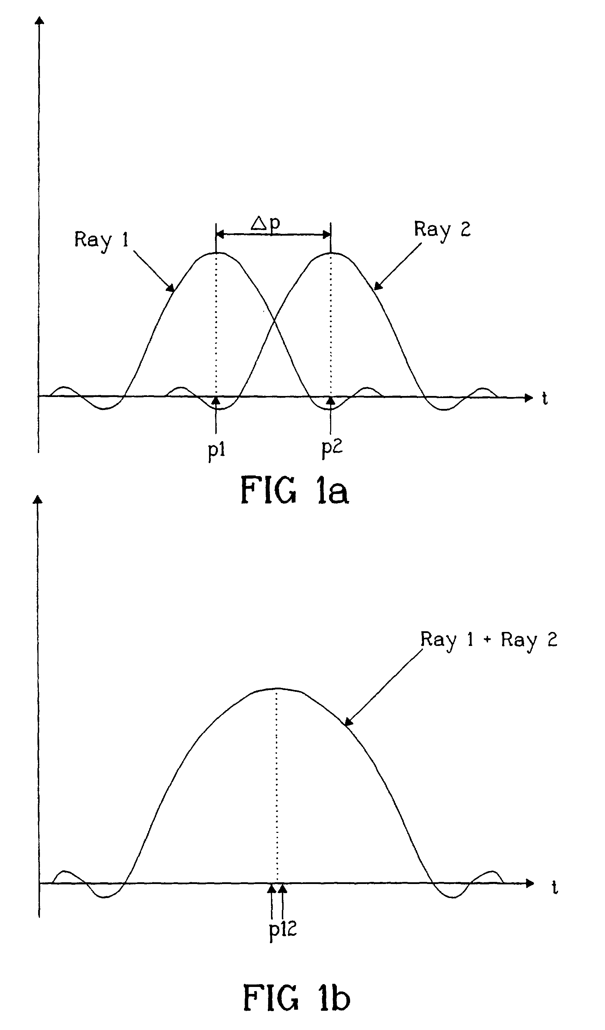

Figures 1a-b are diagrams illustrating two rays that have been received by a RAKE-receiver very close together in phase according to a known technique. In the illustrated case, there is no control of the allocated branch sampling positions. Branch 1 of the RAKE-receiver shall track ray 1 and branch 2 shall track ray 2 independently of one another. Figure 1a shows the two signals and the original branch sampling positions P₁ and P₂. In the illustrated case, the time distance Δp between these positions is too small for the rays to be resolved by the RAKE-receiver. Figure 1b shows the total signal received in the present case, with ray 1 and ray 2 in phase. Because the two signals appear to be only one signal when received by the receiver, the two signals cannot be resolved in the illustrated case.

If, when updating, the branches are allocated new sampling values according to a so-called early/late-algorithm (described in more detail below) , the two signals will be allocated the optimal sampling positions p₁₂ corresponding to the peak of the total signal (see the Figure). They will thus adopt the same position and after having taken this position the branches will then both track solely one ray in time. Tracking of the other ray is lost in this case, and therewith the frequency diversity.

The situation would have been different if the same signals, ray 1 and ray 2, had been received just as densely as in the illustrated case but in counterphase. It would then have been possible to distinguish two peaks and therewith enable the two signals to be resolved.

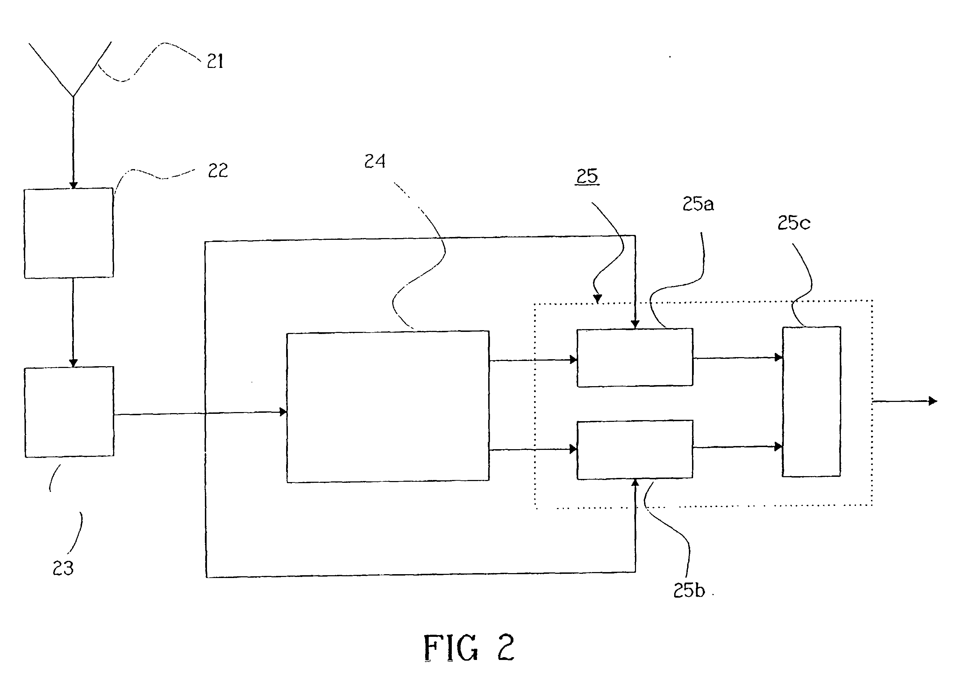

Figure 2 is a block schematic illustrating part of a mobile radio system which includes a RAKE-receiver which utilizes the inventive method. A signal received by an antenna 21 arrives at a tracking block 24, which implements the inventive method, and a RAKE-receiver 25, subsequent to radio frequency division in block 22 and A/D-convertion in block 23. The RAKE-receiver 25 includes a number of receiving units, so-called branches 25a, 25b, and means 25c for combining the branch output signals. When signals arrive at the RAKE-receiver 25 at different arrival times, each of the signals is received separately by respective branches 25a, 25b. The sampling position allocation of the branches is controlled and checked from the tracking block 24, in accordance with the inventive method. The signals from the various RAKE-branches are then combined in the combining means 25c in accordance with a known technique, so as to obtain an output signal for further processing in the CDMA-system.

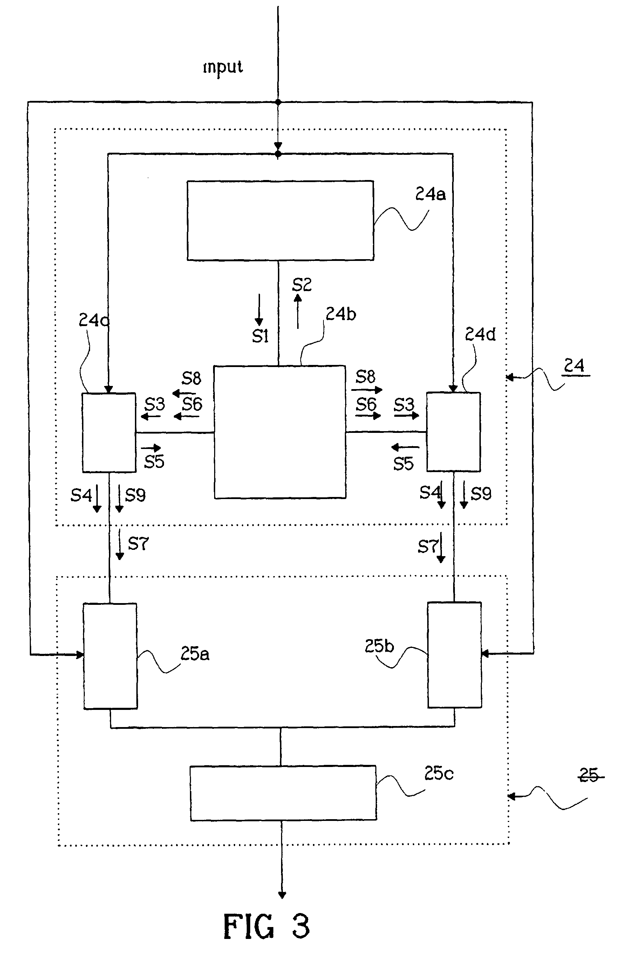

Figure 3 is a block schematic illustrating the components of the tracking block and shows how said block is connected to the RAKE-branches. The tracking block 24 of Figure 2 and illustrated in Figure 3 includes a search unit 24a, a processor unit 24b and two tracking units 24c and 24d. These units are mutually connected by means of two-directional bus connections with the signal flows S₁-S₉ illustrated in Figure 3 and described in more detail below.

The search unit 24a and the two tracking units 24c, 24d are comprised of signal processors. In particular, the search unit 24a is a correlator which correlates an incoming signal with a code sequence known in the receiver for detecting correct signals incoming to the RAKE-receiver. The search unit 24a and the two tracking units 24c and 24d are controlled by an algorithm from the process unit 24b, as described in more detail below.

Although the tracking block 24 has been shown divided in Figure 3 into the aforesaid units, inorder to improve clarity, it will be unterstood that the tracking block 24 may be designed as one single integrated circuit (ASIC). The arrangement may also include more than one search unit. These search units then search at different time intervals, to increase the speed of the search.

As shown in Figure 3, the RAKE-receiver 25 of Figure 2 includes the two branches 25a and 25b and the combining means 25c. Each of the branches 25a and 25b is connected to a respective tracking unit 24c and 24d, and the combining means 25c is connected to a downstream unit in the CDMA-system (not shown).

As before described, a multi-path spread signal is comprised of a number of mutually time-shifted rays, wherein the ray that is received first and has travelled the shortest path to the receiver can be considered as being the main ray. The main ray may be the direct ray that has not been spread, or a ray that has been spread by some form of object when the direct ray has been attenuated out. The first incoming signal having a signal strength which exceeds a predetermined minimum strength, Mₘᵢₙ, is received by the search unit 24a in the tracking block 24. The search unit 24a searches for a time interval within which one or more echoes (rays) of the main ray can be expected to be found.

The search unit 24a correlates input data with the correct code sequency at different time points, and a signal peak is obtained when a signal is found. Otherwise only noise is obtained. A decision that the correct signal has been received is made by the processor unit 24b on the basis of information, signal S₁, derived from the correlation in the search unit 24a. The processor unit 24b then informs the search unit 24a of its decision, signal S₁, and the search unit 24a continues to search for more rays. The search unit 24c or 24d functions to provide a branch 25a, 25b with its sampling positions, and if the correlation is good indicating that a ray has been found, tracking of the signal is commenced by virtue of the processor unit 24b initiating the tracking unit with sampling start positions, signal S₃. The tracking units 24c and 24d then command their respective branches 25a and 25b, signal S₄, to sample the first values at their start positions.

Before each updating of the sampling position of its branches 25a or 25b, a tracking unit 24c or 24d will first determine the best sampling value around the signal peak of the signal to be tracked. In the illustrated case, it is assumed that the search unit 24a finds two rays and that, accordingly, the processor unit 24b initiates both tracking units 24c, 24d with appropriate sampling positions for the two branches 25a and 25b respectively.

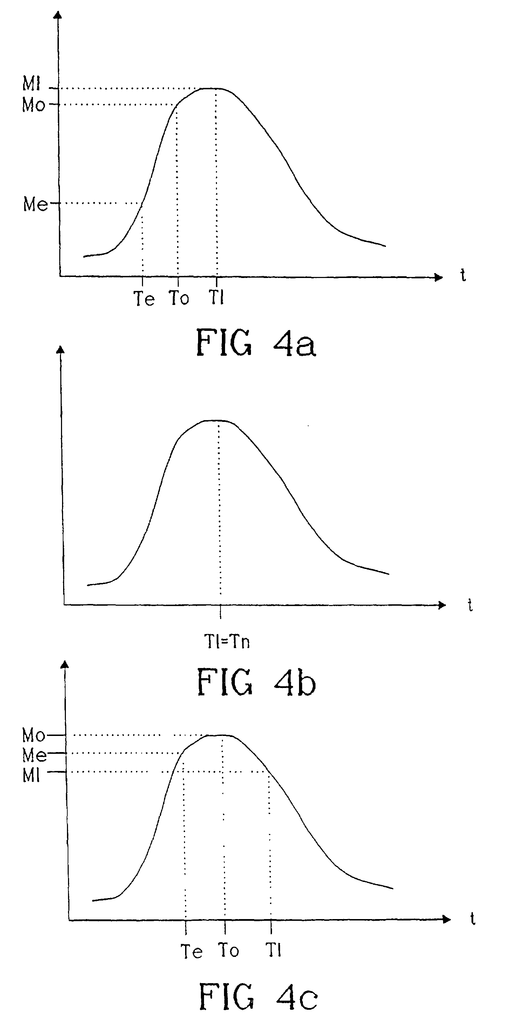

Before updating the sampling positions of the branches 25a, 25b, the tracking units 24c, 24d determine the updating values of sampling positions according to an early/late-algorithm illustrated in Figures 4a-c. This algorithm is stored in the tracking units 24c and 24d. The signal strength is determined at two different positions, firstly in a position earlier than the sampling positions concerned and secondly in a position later than said sampling position.

In Figure 4a, the earlier position is referenced Tₑ, the current or prevailing position is referenced Tₒ and the later position is referenced T₁. The strength of the signal at these time points is referenced Mₑ, Mₒ and M₁ respectively. The sampling position updating value is determined as the position in which the strongest signal strength is measured. When the strongest signal strength is measured in the current sampling position Tₒ, this position is maintained until the next updating occasion when the same procedure is carried out. This case is shown in Figure 4c. In other cases, the sampling position is moved either to the position Tₑ or the position T₁ in which the strongest signal strength is measured. In the case of the Figure 4a illustration, the strongest signal strength is measured in the later position T₁ and consequently the updating value of the sampling position Tₙ is in this case shifted to the later position T₁, as shown in Figure 4b. The updating values for the sampling positions T₁ and T₂ for the two branches 25a and 25b are determined in this way.

Before actually updating the sampling positions of the branches 25a, 25b with the updating values T₁ and T₂ determined by the early/late-algorithm, the processor unit 24b is informed by the tracking units 24c and 24d of the result of the performed early/late-algorithm signal S₅. The processor unit compares the time difference between the two updating values of sampling positions |T₁-T₂| determined for the two branches with a predetermined minimum distance Tₘᵢₙ.

When the time difference between the determined sampling-position updating values is greater than the minimum distance, the processor unit 24b informs the tracking units 24c and 24d that the determined updating values are acceptable, signal S₆. The tracking units 24c, 24d then update the branches 25a, 25b with the determined updating values T₁, T₂, signal S₇.

On the other hand, if the time difference is smaller than the minimum distance Tₘᵢₙ, the processor unit 24b forces at least one tracking unit 24c, 24d to move its specified sampling position updating value so that the difference will thereafter exceed the minimum distance T_{min'} signal S₈. The specified sampling position updating values can be separated in accordance with any one of the following three strategies which involve respectively:
1. Mutually separating both updating values so as to obtain two new updating values.
2. Moving the sampling position updating value for the branch that tracks the weakest signal away from the sampling position updating value for the strongest signal, which is maintained and unchanged. Thus, in this case, a new sampling position updating value is determined for the weakest signal.
3. Moving the sampling position updating value for the branch that tracks the strongest signal away from thesampling position updating value for the weakest signal,which is retained unchanged. Thus, in this case a new sampling position updating value is determined for the strongest signal.

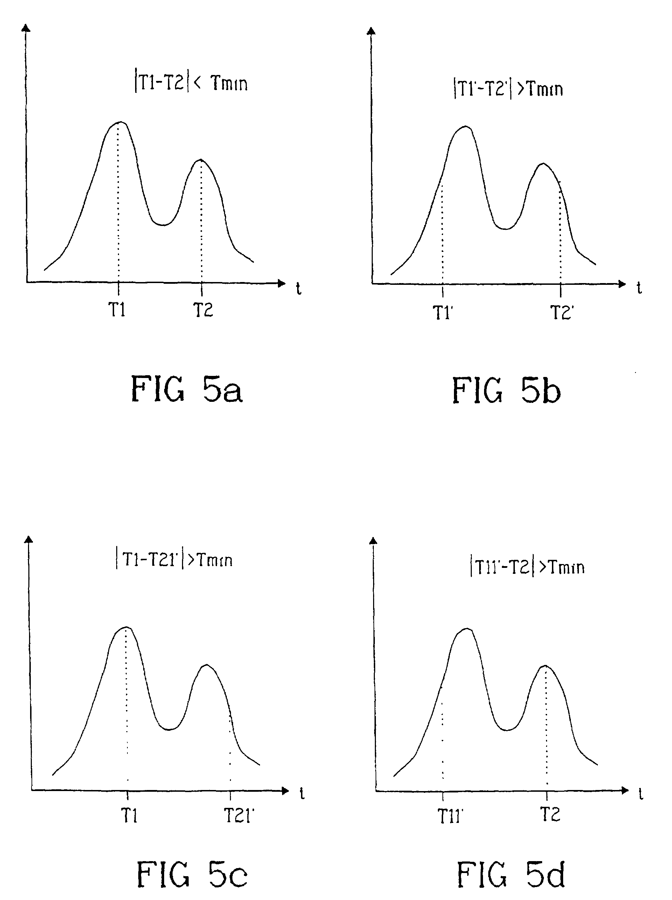

Figures 5a-5d illustrate the different strategies for mutually separating the updating values of sampling positions. Figure 5a shows the optimal sampling positions T₁ and T₂. In this case, the first branch 25a tracks the strongest signal and the second branch 25b tracks the weakest signal. Strategy 1 is shown in Figure 5b, with which two new sampling position T₁' and T₂' are determined. Figure 5c shows strategy 2 wherewith there is determined a new sampling position T₂₁' for the second branch 25b which tracks the weakest signal. Figure 5d shows the third strategy wherewith the sampling position for the first branch 25a that tracks the strongest signal is moved to position T₁₁'.

After separating the updating positions, the signal strength is checked at the new updating value or values of the sampling positions T₁', T₂', T₁₂', T₂₁'. If the signal strength M₁', M₂', M₁₂' M₂₁' at one position is below the predetermined minimum strength Mₘᵢₙ, the current or prevailing sampling positions are retained until the next updating occasion. If the signal strength exceeds the minimum strength in both of the sampling positions, the branches are updated with the sampling position updating values determined in accordance with one of the aforesaid strategies, signal S₉.

The three strategies imply that the signal will not be sampled in the optimal sampling position if this would result in the branches being position too close together. Although this will result in a somewhat poorer signal value than is optimal, frequency diversity is gained instead of losing the tracking of a signal. The updating procedure is carried out continuously during a signal tracking process.

In the aforedescribed embodiment, two rays are received by two branches. It will be understood, however, that the inventive method and inventive arrangement also function in the aforedescribed manner when more than two rays are received. For instance, when three rays are found by the search unit, three tracking units will provide three branches with appropriate sampling positions. In this case, the strategies applied in mutually separating branches that lie closely adjacent one another will be slightly different than in the case of two branches. In this case, the sampling positions of the first and the second branches cannot simply be compared with one another and the sampling position of the second branch then compared with the sampling positions of the third branch. Such a comparison procedure may result in the sampling position of the second branch being moved forwards and backwards. It is therefore necessary to check both time distances independently of one another. One strategy is never to move the second branch but only the first and the third branches if so required.

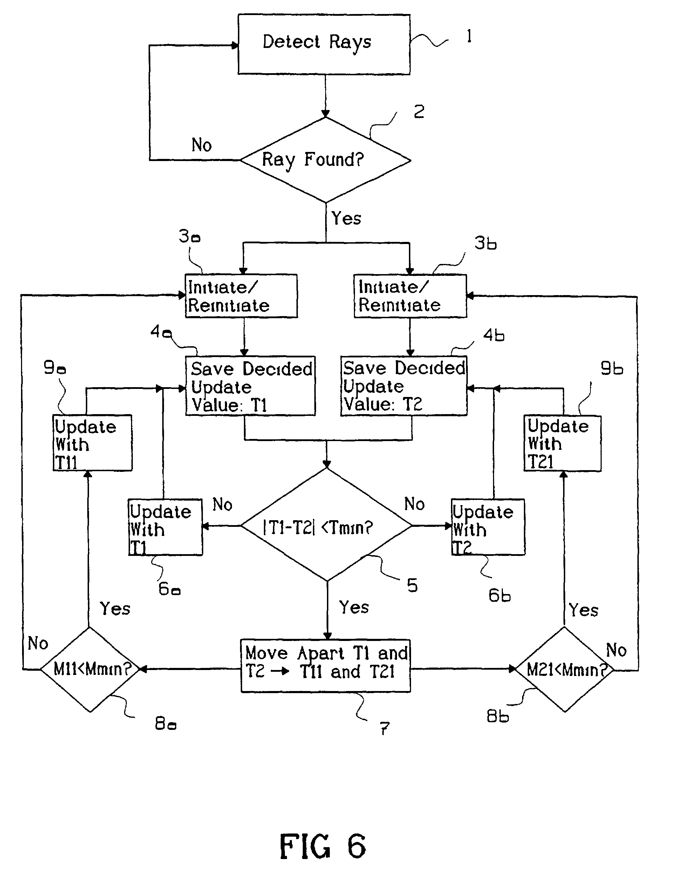

Figure 6 illustrates the different steps of an inventive method when two rays are found. Incoming signals are detected in step 1, and whether or not a ray has been found is determined in step 2, by correlating received input data at different time points, step 2. If the correlation is poor (no in step 2), the search for rays is continued. If the correlation is judged to be good (yes in step 2), a ray has been found. In step 3a, tracking of the rays is commenced, by initiating a branch with a suitable sampling position start value.

In the case illustrated in Figure 6, there is found a further ray which passes through steps 1 and 2 in accordance with the aforegoing. Another branch is then allocated to search for this ray, and accordingly this branch is initiated with an appropriate sampling position start value for tracking this further ray, step 3b. A sampling position updating value is determined in accordance with the earlier described early/late-algorithm, steps 4a and 4b, prior to updating the current sampling positions of the branches. This is effected by determining the signal strength in an early position upstream of the current sampling position and in a late position downstream of said current sampling position. When the signal strength in the current position is the greatest strength, this position is retained until the next updating occasion. If the signal strength is greatest in the early position, the new sampling position updating value is determined as this value. If, instead, the signal strength is greatest in the later position, this position becomes the new updating position. The updating values of the sampling positions T1 and T2 for both branches are determined in this way.

Prior to updating with the updating values determined by the early/late-algorithm, a check is made to ascertain that these values are sufficiently spaced in time. This check is carried out by comparing the time difference between the determined updating positions (T₁-T₂) with a predetermined smallest distance Tₘᵢₙ, step 5. If the time difference is greater than the smallest permitted distance, (no in step 5), the branches are updated with the determined sampling positions T₁ and T₂, step 6a and 6b. If the time difference is smaller (yes in step 5), at least one updating value is moved to another sampling position, so that the distance between the thus determined positions is greater than the smallest permitted distance, step 7.

Separation of the sampling position updating values is effected in accordance with one of the earlier described separation strategies. A check is then made to ascertain whether or not the signal strength at the position that has been moved is higher than the lowest permitted signal strength Mₘᵢₙ, steps 8a and 8b. If the signal strength is too low (no in steps 8a and 8b), the current sampling positions are retained until the next updating occasion. If the signal strength is acceptable, (yes in steps 8a and 8b), the branches are updated with the sampling positions determined in step 7, steps 9a and 9b.

As beforementioned, the method can be applied with more than two incoming time-shifted signals. According to simulations, a suitable minimum distance Tₘᵢₙ may be of the order of one chip duration. When practicing earlier known techniques, the RAKE-receiver has been unable to resolve signals that follow one another at such densities, and hence frequency diversity has been lost. The inventive method thus improves the quality of the received baseband signal.

## Claims

1. A method of tracking signals incoming to a radio receiver in very close succession and comprising a main ray and at least one other ray which is time-shifted in relation to the main ray, the method comprising:
searching (1) for signals and detecting (2) at least two rays which carry the same information and which arrive at the receiver in time shifted relationship with one another;
initiating (3a, 3b) separate tracking of each of the detected rays; and
determining (4a, 4b) a respective updating value of the sampling position for each tracked ray, the method being **characterised by** further comprising:
determining (5) the time difference between two mutually adjacent sampling position updating values associated with different rays;
comparing (5) said time difference with a predetermined minimum value; and
changing (7) at least one of said updating values in accordance with said time difference, such that the time difference between the sampling positions will thereafter be greater than the minimum value.

2. A method according to Claim 1, **characterized by** continuously updating (6a, 6b, 9a, 9b) said updating values.

3. A method according to Claim 1 or Claim 2, **characterized in that** determination (4a, 4b) of a respective updating value includes calculating the signal strength in the current sampling position of a tracked ray and in two separated sampling positions of which one position is earlier than the current value of the sampling position and the other position is later than the current value of the sampling position; and **in that** the updating value is determined as that position of said three sampling positions in which the best signal strength has been obtained.

4. A method according to Claim 3, **characterized by** updating (6a, 6b) with the determined updating values of sampling positions when the time difference between these updating values is greater than the predetermined minimum value.

5. A method according to Claims 1-4, **characterized by** changing (7) at least one of said updating values when the time difference between the determined updating value is smaller than the predetermined minimum value.

6. A method according to Claim 5, **characterized by** determining (7) the new updating values for both rays when the updating values of the sampling positions lie closer together in time than the predetermined minimum value, such that the time difference between the new updating values is greater than the predetermined minimum value.

7. A method according to Claim 5, **characterized by** determining (7) a new updating value of the sampling position for the weakest ray when the updating values lie closer together in time than the predetermined minimum value, so that the time difference between the new updating value for the weakest ray and the updating value for the strongest ray will be greater than the predetermined minimum value.

8. A method according to Claim 5, **characterized by** determining (7) a new updating value of the sampling position for the strongest ray when the time difference between the updating values of sampling positions lie closer to one another in time than the predetermined minimum value, so that the time difference between the new updating value for the strongest ray and the updating value for the weakest ray will be greater than the predetermined minimum value.

9. A method according to any one of Claims 5-8, **characterized by**:
calculating (8a, 8b) the signal strength at the new updating values of sampling positions;
comparing (8a, 8b) said signal strength with a predetermined minimum strength;
reinitiating (3a, 3b) with the current values of the sampling positions when the signal strength is smaller than the minimum signal strength; and
updating (9a, 9b) the sampling positions with the determined updating values when the signal strength is greater than the predetermined minimum strength.

10. A method according to Claims 1-9, **characterized in that** the predetermined minimum value is one chip duration.

11. An arrangement for tracking rays incoming to a radio receiver in very close succession, comprising at least one search unit (24a) which is adapted to search input data within a given time interval and to correlate the received input data at different time points, a plurality of tracking units (24b, 24c) which are adapted to determine the updating values for the current sampling positions and to continuously update the current sampling values, and a processor unit (24b), **characterized in that** the processor unit (24b) is constructed to:
a) decide based on correlation of input data whether a ray has been detected, wherein the processor unit is adapted to order the search unit (24a) to continue its search for incoming rays when no ray has been detected and to initiate a tracking unit (24c, 24d) with a sampling position start value when the a ray has been detected;
b) determine the time difference between two mutually adjacent updating values of sampling positions associated with different rays, wherein the processor unit is adapted to compare said time difference with a predetermined minimum value, and wherein the processor unit is adapted to order at least one of the tracking units (24c, 24d) to shift its sampling position updating value when said time difference is smaller than the predetermined minimum value, such that the time difference between the sampling positions will thereafter be greater than the minimum value; and
c) check that the signal strength in each determined updating position is greater than a predetermined minimum strength.

12. An arrangement according to Claim 11, **characterized in that** the search unit (24a) includes a signal processor and at least one correlator.

13. An arrangement according to Claim 11, **characterized in that** the tracking unit (24c, 24d) includes a signal processor.

14. An arrangement according to Claim 11, **characterized in that** the search unit (24a) and the tracking units (24c, 24d) are connected to the processor unit (24b) by means of two-directional bus connections.

15. A RAKE-receiver (25), comprising a plurality of RAKE-branches (25a, 25b), **characterized in: that** the RAKE-receiver includes an arrangement according to any one of claims 11-14; that each branch (25a, 25b) is connected to a respective tracking unit (24c, 24d); and that the tracking units (24c, 24d) are adapted for allocation of sampling position updating values to the branches (25a, 25b).

## Patentansprüche

**1.** Verfahren zum Nachverfolgen von Signalen, die zu einem Funkempfänger in sehr naher Abfolge hereinkommen und einen Hauptstrahl und wenigstens einen anderen Strahl, der in Bezug auf den Hauptstrahl zeitlich verschoben ist, umfassen, wobei das Verfahren die folgenden Schritte umfasst:
Suchen (1) nach Signalen und Erfassen (2) von wenigstens zwei Strahlen, die die gleiche Information führen und die an den Empfänger in einer zeitlich verschobenen Beziehung zueinander ankommen;
Initiieren (3a, 3b) einer getrennten Nachverfolgung von jedem der erfassten Strahlen; und
Bestimmen (4a, 4b) eines jeweiligen Aktualisierungswerts der Abtastposition für jeden nachverfolgten Strahl, wobei das Verfahren **dadurch gekennzeichnet ist, dass** es ferner die folgenden Schritte umfasst:
Bestimmen (5) der Zeitdifferenz zwischen zwei zueinander angrenzenden Abtastposition-Aktualisierungswerten, die zu unterschiedlichen Strahlen gehören;
Vergleichen (5) der Zeitdifferenz mit einem vorgegebenen minimalen Wert; und
Ändern (7) von wenigstens einem der Aktualisierungswerte in Übereinstimmung mit der Zeitdifferenz derart, dass die Zeitdifferenz zwischen den Abtastpositionen danach größer als der minimale Wert sein wird.

**2.** Verfahren nach Anspruch 1, **gekennzeichnet durch** ein kontinuierliches Aktualisieren (6a, 6b, 9a, 9b) der Aktualisierungswerte.

**3.** Verfahren nach Anspruch 1 oder Anspruch 2, **dadurch gekennzeichnet, dass** eine Bestimmung (4a, 4b) eines jeweiligen Aktualisierungswerts das Berechnen der Signalstärke in der gegenwärtigen Abtastposition eines nachverfolgten Strahls und in zwei getrennten Abtastpositionen, wobei eine Position davon früher als der gegenwärtige Wert der Abtastposition ist und die andere Position später als der gegenwärtige Wert der Abtastposition ist, einschließt;
und dass der Aktualisierungswert als diejenige Position der drei Abtastpositionen bestimmt wird, in der die beste Signalstärke erhalten worden ist.

**4.** Verfahren nach Anspruch 3, **gekennzeichnet durch** ein Aktualisieren (6a, 6b) von Abtastpositionen mit den bestimmten Aktualisierungswerten, wenn die Zeitdifferenz zwischen diesen Aktualisierungswerten größer als der vorgegebene minimale Wert ist.

**5.** Verfahren nach den Ansprüchen 1 - 4, **gekennzeichnet durch** ein Ändern (7) von wenigstens einem der Aktualisierungswerte, wenn die Zeitdifferenz zwischen dem bestimmten Aktualisierungswert kleiner als der vorgegebene minimale Wert ist.

**6.** Verfahren nach Anspruch 5, **gekennzeichnet durch** ein Bestimmen (7) der neuen Aktualisierungswerte für beide Strahlen, wenn die Aktualisierungswerte der Abtastpositionen zeitlich näher zusammen liegen als der vorgegebene minimale Wert, so dass die Zeitdifferenz zwischen den neuen Aktualisierungswerten größer als der vorgegebene minimale Wert ist.

**7.** Verfahren nach Anspruch 5, **gekennzeichnet durch** ein Bestimmen (7) eines neuen Aktualisierungswerts der Abtastposition für den schwächsten Strahl, wenn die Aktualisierungswerte zeitlich näher zusammen liegen als der vorgegebene minimale Wert, so dass die Zeitdifferenz zwischen dem neuen Aktualisierungswert für den schwächsten Strahl und dem Aktualisierungswert für den stärksten Strahl größer als der vorgebebene minimale Wert sein wird.

**8.** Verfahren nach Anspruch 5, **gekennzeichnet durch** ein Bestimmen (7) eines neuen Aktualisierungswerts der Abtastposition für den stärksten Strahl, wenn die Zeitdifferenz zwischen den Aktualisierungswerten von Abtastpositionen zeitlich näher zueinander liegen als der vorgegebene minimale Wert, so dass die Zeitdifferenz zwischen dem neuen Aktualisierungswert für den stärksten Strahl und dem Aktualisierungswert für den schwächsten Strahl größer als der vorgegebene minimale Wert sein wird.

**9.** Verfahren nach irgendeinem der Ansprüche 5 - 8, **gekennzeichnet durch** die folgenden Schritte:
Berechnen (8a, 8b) der Signalstärke an den neuen Aktualisierungswerten von Abtastpositionen;
Vergleichen (8a, 8b) der Signalstärke mit einer vorgegebenen minimalen Stärke;
erneutes Initiieren (3a, 3b) mit den gegenwärtigen Werten der Abtastpositionen, wenn die Signalstärke kleiner als die minimale Signalstärke ist; und
Aktualisieren (9a, 9b) der Abtastposition mit den bestimmten Aktualisierungswerten, wenn die Signalstärke größer als die vorgegebene minimale Stärke ist.

**10.** Verfahren nach den Ansprüchen 1 - 9, **dadurch gekennzeichnet, dass** der vorgegebene minimale Wert die Dauer eines Chips ist.

**11.** Anordnung zum Nachverfolgen von Strahlen, die zu einem Funkempfänger in sehr naher Abfolge hereinkommen, umfassend wenigstens eine Sucheinheit (24a), die dafür ausgelegt ist, um Eingangsdaten innerhalb eines gegebenen Zeitintervalls zu suchen und die empfangenen Eingangsdaten zu unterschiedlichen Zeitpunkten zu korrelieren, eine Vielzahl von Nachverfolgungseinheiten (24b, 24c), die dafür ausgelegt sind, die Aktualisierungswerte der gegenwärtigen Abtastpositionen zu bestimmen und die gegenwärtigen Abtastwerte kontinuierlich zu aktualisieren, und eine Prozessoreinheit (24b), **dadurch gekennzeichnet, dass** die Prozessoreinheit (24b) konstruiert ist, um:
a) auf Grundlage einer Korrelation von Eingangsdaten zu entscheiden, ob ein Strahl erfasst worden ist, wobei die Prozessoreinheit dafür ausgelegt ist, um die Sucheinheit (24a) anzuweisen ihre Suche nach ankommenden Strahlen fortzusetzen, wenn kein Strahl erfasst worden ist, und eine Nachverfolgungseinheit (24c, 24d) mit einem Abtastpositions-Startwert zu initiieren, wenn der Strahl erfast worden ist;
b) die Zeitdifferenz zwischen zwei zueinander angrenzenden Aktualisierungswerten von Abtastpositionen, die zu unterschiedlichen Strahlen gehören, zu bestimmen, wobei die Prozessoreinheit ausgelegt ist, um die Zeitdifferenz mit einem vorgegebenen minimalen Wert zu vergleichen, und wobei die Prozessoreinheit ausgelegt ist, um wenigstens eine der Nachverfolgungseinheiten (24c, 24d) anzuweisen, ihren Abtastpositions-Aktualisierungswert zu verschieben, wenn die Zeitdifferenz kleiner als der vorgegebene minimale Wert ist, so dass die Zeitdifferenz zwischen den Abtastpositionen danach größer als der minimale Wert sein wird; und
c) Überprüfen, dass die Signalstärke in jeder bestimmten Aktualisierungsposition größer als eine vorgegebene minimale Stärke ist.

**12.** Anordnung nach Anspruch 11, **dadurch gekennzeichnet, dass** die Nachverfolgungseinheit (24c, 24d) einen Signalprozessor umfasst.

**14.** Anordnung nach Anspruch 11, **dadurch gekennzeichnet, dass** die Sucheinheit (24a) und die Nachverfolgungseinheit (24c, 24d) mit der Prozessoreinheit (24b) über zwei-direktionale Busverbindungen verbunden sind.

**15.** RAKE-Empfänger (25), umfassend eine Vielzahl von RAKE-Zweigen (25a, 25b), **dadurch gekennzeichnet, dass** der RAKE-Empfänger eine Anordnung in Übereinstimmung mit einem der Ansprüche 11 - 14 einschließt; dass jeder Zweig (25a, 25b) mit einer jeweiligen Nachverfolgungseinheit (24c, 24d) verbunden ist; und dass die Nachverfolgungseinheiten (24c, 24d) für eine Zuordnung von Abtastpositions-Aktualisierungswerten zu den Zweigen (25a, 25b) ausgelegt sind.

## Revendications

1. Procédé de suivi de signaux arrivant sur un récepteur radio selon une succession très proche et comprenant un rayon principal et au moins un autre rayon qui est décalé temporellement par rapport au rayon principal, le procédé comprenant:
la recherche (1) de signaux et la détection (2) d'au moins deux rayons qui transportent la même information et qui arrivent au niveau du récepteur selon une relation décalée temporellement les uns par rapport aux autres;
l'initiation (3a, 3b) d'un suivi séparé de chacun des rayons détectés; et
la détermination (4a, 4b) d'une valeur de mise à jour respective de la position d'échantillonnage pour chaque rayon suivi, le procédé étant **caractérisé en ce qu'**il comprend en outre:
la détermination (5) de la différence temporelle entre deux valeurs de mise à jour de positions d'échantillonnage adjacentes mutuellement qui sont associées à des rayons différents;
la comparaison (5) de ladite différence temporelle à une valeur minimum prédéterminée; et
la modification (7) d'au moins l'une desdites valeurs de mise à jour conformément à ladite différence temporelle de telle sorte que la différence temporelle entre les positions d'échantillonnage soit ensuite supérieure à la valeur minimum.

2. Procédé selon la revendication 1, **caractérisé par** une mise à jour en continu (6a, 6b, 9a, 9b) desdites valeurs de mise à jour.

3. Procédé selon la revendication 1 ou 2, **caractérisé en ce que** la détermination (4a, 4b) d'une valeur de mise à jour respective inclut le calcul de l'intensité de signal à la position d'échantillonnage courante d'un rayon suivi et en deux positions d'échantillonnage séparées dont une position est plus tôt que la valeur courante de la position d'échantillonnage et dont l'autre position est plus tard que la valeur courante de la position d'échantillonnage; et **en ce que** la valeur de mise à jour est déterminée en tant que position desdites trois positions d'échantillonnage où l'intensité de signal la meilleure a été obtenue.

4. Procédé selon la revendication 3, **caractérisé par** la mise à jour (6a, 6b) à l'aide des valeurs de mise à jour déterminées de positions d'échantillonnage lorsque la différence temporelle entre ces valeurs de mise à jour est supérieure à la valeur minimum prédéterminée.

5. Procédé selon les revendications 1 à 4, **caractérisé par** la modification (7) d'au moins l'une desdites valeurs de mise à jour lorsque la différence temporelle entre les valeurs de mise à jour déterminées est inférieure à la valeur minimum prédéterminée.

6. Procédé selon la revendication 5, **caractérisé par** la détermination (7) des nouvelles valeurs de mise à jour pour les deux rayons lorsque les valeurs de mise à jour des positions d'échantillonnage s'étendent plus près en association temporellement que la valeur minimum prédéterminée de telle sorte que la différence temporelle entre les nouvelles valeurs de mise à jour soit supérieure à la valeur minimum prédéterminée.

7. Procédé selon la revendication 5, **caractérisé par** la détermination (7) d'une nouvelle valeur de mise à jour de la position d'échantillonnage pour le rayon le plus faible lorsque les valeurs de mise à jour s'étendent plus près en association temporellement que la valeur minimum prédéterminée de telle sorte que la différence temporelle entre la nouvelle valeur de mise à jour pour le rayon plus faible et la valeur de mise à jour pour le rayon plus fort soit supérieure à la valeur minimum prédéterminée.

8. Procédé selon la revendication 5, **caractérisé par** la détermination (7) d'une nouvelle valeur de mise à jour de la position d'échantillonnage pour le rayon plus fort lorsque la différence temporelle entre les valeurs de mise à jour de positions d'échantillonnage s'étend plus près de façon mutuelle temporellement que la valeur minimum prédéterminée de telle sorte que la différence temporelle entre la nouvelle valeur de mise à jour pour le rayon le plus fort et la valeur de mise à jour pour le rayon le plus faible soit supérieure à la valeur minimum prédéterminée.

9. Procédé selon l'une quelconque des revendications 5 à 8, **caractérisé par**:
le calcul (8a, 8b) de l'intensité de signal pour les nouvelles valeurs de mise à jour de positions d'échantillonnage;
la comparaison (8a, 8b) de ladite intensité de signal à une intensité minimum prédéterminée;
la réinitiation (3a, 3b) avec les valeurs courantes des positions d'échantillonnage lorsque l'intensité de signal est inférieure à l'intensité de signal minimum; et
la mise à jour (9a, 9b) des positions d'échantillonnage avec les valeurs de mise à jour déterminées lorsque l'intensité de signal est supérieure à l'intensité minimum prédéterminée.

10. Procédé selon les revendications 1 à 9, **caractérisé en ce que** la valeur minimum prédéterminée est une durée d'un tronçon.

11. Agencement pour suivre des rayons qui arrivent sur un récepteur radio selon une succession très proche, comprenant au moins une unité de recherche (24a) qui est adaptée pour rechercher des données d'entrée dans un intervalle temporel donné et pour corréler les données d'entrée reçues en différents points temporels, une pluralité d'unités de suivi (24b, 24c) qui sont adaptées pour déterminer les valeurs de mise à jour pour les positions d'échantillonnage courantes et pour mettre à jour en continu les valeurs d'échantillonnage courantes et une unité de processeur (24b), **caractérisé en ce que** l'unité de processeur (24b) est construite pour:
a) décider, sur la base d'une corrélation de données d'entrée, si oui ou non un rayon a été détecté, où l'unité de processeur est adaptée pour ordonner à l'unité de recherche (24a) de continuer sa recherche de rayons arrivants lorsqu'aucun rayon n'a été détecté et d'initier une unité de suivi (24c, 24d) avec une valeur de début de position d'échantillonnage lorsque un rayon a été détecté;
b) déterminer la différence temporelle entre deux valeurs de mise à jour mutuellement adjacentes de positions d'échantillonnage associées à des rayons différents, où l'unité de processeur est adaptée pour comparer ladite différence temporelle à une valeur minimum prédéterminée et où l'unité de processeur est adaptée pour ordonner à au moins l'une des unités de suivi (24c, 24d) de décaler sa valeur de mise à jour de position d'échantillonnage lorsque ladite différence temporelle est inférieure à la valeur minimum prédéterminée de telle sorte que la différence temporelle entre les positions d'échantillonnage soit ensuite supérieure à la valeur minimum; et
c) vérifier que l'intensité de signal à chaque position de mise à jour déterminée est supérieure à une intensité minimum prédéterminée.

12. Agencement selon la revendication 11, **caractérisé en ce que** l'unité de recherche (24a) inclut un processeur de signal et au moins un corrélateur.

13. Agencement selon la revendication 11, **caractérisé en ce que** l'unité de suivi (24c, 24d) inclut un processeur de signal.

14. Agencement selon la revendication 11, **caractérisé en ce que** l'unité de recherche (24a) et les unités de suivi (24c, 24d) sont connectées à l'unité de processeur (24b) au moyen de connexions par bus bidirectionnelles.

15. Récepteur RAKE (25) comprenant une pluralité de branches RAKE (25a, 25b), **caractérisé en ce que** le récepteur RAKE inclut un agencement selon l'une quelconque des revendications 11 à 14, **en ce que** chaque branche (25a, 25b) est connectée à une unité de suivi respective (24c, 24d) et **en ce que** les unités de suivi (24c, 24d) sont mises à jour pour une allocation de valeurs de mise à jour de positions d'échantillonnage aux branches (25a, 25b).
